# EUROPÄISCHE PATENTSCHRIFT

(11) **EP 3 652 018 B1**
(45) Veröffentlichungstag und Bekanntmachung des Hinweises auf die Patenterteilung: **14.04.2021**
(21) Anmeldenummer: 18736861.8
(22) Anmeldetag: 29.06.2018
(51) Int. Cl.: B60N 2/06, B60N 2/07, B60N 2/42, B60N 2/015

(54) **LÄNGSEINSTELLER FÜR EINEN FAHRZEUGSITZ SOWIE FAHRZEUGSITZ**
LONGITUDINAL ADJUSTER FOR A VEHICLE SEAT, AND VEHICLE SEAT
DISPOSITIF DE RÉGLAGE LONGITUDINAL POUR SIÈGE DE VÉHICULE ET SIÈGE DE VÉHICULE

(30) Priorität: 14.07.2017 DE 102017212081
(43) Veröffentlichungstag der Anmeldung: 20.05.2020
(73) Patentinhaber: Adient Engineering and IP GmbH, 51399 Burscheid (DE)
(72) Erfinder: EMRICH, Holger, 66887 Erdesbach (DE); KOENIG, Michael, 67688 Rodenbach (DE); REISCHMANN, Martin, 66989 Hoehfroeschen (DE); RHEINHEIMER, Frank, 76833 Boechingen (DE); VELTEN, Ralf, 67716 Heltersberg (DE); BINGERT, Thomas, 67697 Otterberg (DE); DICK, Erik, 67697 Otterberg (DE)
(74) Vertreter: Liedhegener, Ralf
(86) Internationale Anmeldenummer: PCT/EP2018/067540
(87) Internationale Veröffentlichungsnummer: WO 2019/011667

(56) Entgegenhaltungen:
- EP-A1- 0 900 689
- EP-A2- 0 242 859
- EP-A2- 2 070 761
- DE-A1- 10 046 204
- DE-B3-102004 001 593
- FR-A1- 2 901 192

## Beschreibung

Die Erfindung betrifft einen Längseinsteller für einen Fahrzeugsitz, insbesondere Kraftfahrzeugsitz, aufweisend mindestens ein Schienenpaar, welches aus einer ersten Sitzschiene, insbesondere zur Verbindung mit einer Sitzstruktur, und einer zweiten Sitzschiene, insbesondere zur Verbindung mit einer Fahrzeugstruktur, gebildet ist, wobei die Sitzschienen des Schienenpaares in Längsrichtung relativ zueinander verschiebbar sind und unter Bildung eines Innenkanals einander wechselseitig umgreifen. In dem Innenkanal ist ein an der ersten Sitzschiene befestigtes Sicherungsprofil angeordnet, und in dem Innenkanal ist ferner eine relativ zur zweiten Sitzschiene fixierte Zahnstange angeordnet. Das Sicherungsprofil und die Zahnstange sind im Normalfall voneinander beabstandet und gelangen in Reaktion auf eine vorgegebene Krafteinwirkung, beispielsweise im Crashfall, miteinander formschlüssig in Eingriff. Die Erfindung betrifft ferner einen Fahrzeugsitz.

### Stand der Technik

Aus der DE 102 10 555 B4 sind ein gattungsgemäßer Längseinsteller sowie ein gattungsgemäßer Fahrzeugsitz bekannt. Der Längseinsteller umfasst zwei relativ zueinander verschiebbare Sitzschienen, nämlich eine Oberschiene und eine Unterschiene, welche einander wechselseitig umgreifen. Die Sitzschienen umfassen jeweils Anschlagmittel, wobei die Anschlagmittel im Crashfall eine zusätzliche Verbindung zwischen der Oberschiene und der Unterschiene schaffen. In einem Crashfall auftretende Kräfte werden dann zusätzlich über die besagten Anschlagmittel von der Oberschiene und der Unterschiene in die Fahrzeugstruktur eingeleitet.

Aus der EP 0 242 859 A2 ist eine Gleitschienenführung für Fahrzeugsitze bekannt, mit einer stationären Außenschiene und einer verfahrbaren Innenschiene, an der ein Steg als Bremsschiene angeordnet ist. Beidseitig der Bremsschiene ist an der Außenschiene eine Blockiervorrichtung angebracht. Im Crashfall (z. B. Frontcrash, Heckaufprall), werden Blockierelemente der Blockiervorrichtung gegen die Bremsschiene ausgelenkt und bewirken eine Blockierung, so dass Innen- und Außenschiene miteinander verriegelt sind.

Aus der EP 0 900 689 A1 ist eine Abstützung eines Fahrzeugsitzes bekannt, die auf beidseits des Sitzes am Fahrzeugboden befestigten Sitzführungsschienen geführt ist. Um ein unzulässiges Durchbiegen des Sitzgestells unter Extrembelastungen (Crash) zu vermeiden, ist zwischen den beiden Sitzführungsschienen zumindest eine Stützschiene vorgesehen, die fest mit dem Fahrzeugboden verbunden ist. Dieser Stützschiene ist ein fest mit dem Sitzgestell verbundenes Sicherungsteil zugeordnet, welches die Stützschiene jedoch bei Normalbelastung nicht berührt. Die Stützschiene hat eine zum Sitzgestell hinweisende Rastverzahnung sowie eine Abstützbahn. Das Sicherungsteil hat Rastmittel und eine Abstützfläche. Bei einem Frontalcrash kommen infolge der Verformung des Sitzgestells die Rastverzahnung und die Rastmittel in Eingriff und verhindern weitere Verformungen und das Verschieben des Sitzes nach vorn. Bei einem Heckcrash stützt sich die Abstützfläche auf der Abstützbahn auf und verhindert unzulässige Verformungen.

Aus der DE 100 46 204 A1 ist eine Fahrzeugsitz-Längseinstellvorrichtung bekannt, bei der eine Oberschiene gleitend in einer Unterschiene geführt und motorisch bewegt wird durch Zusammenwirken eines drehbar gelagerten Antriebsritzels, welches einer Schiene zugeordnet ist, und einer Zahnstange, welche der anderen Schiene zugeordnet ist, wobei eine Zusatzverriegelung vorgesehen ist, die im Normalfall unwirksam ist und erst im Crashfall die Oberschiene zusätzlich mit der Unterschiene verriegelt, findet im Crashfall eine Relativbewegung zwischen dem Lager des Antriebsritzels und/oder der Zahnstange einerseits und der zugeordneten Schiene andererseits statt, wodurch die Zusatzverriegelung verriegelt.

Aus der FR 2 901 192 A1 ist eine Schienenvorrichtung für einen Fahrzeugsitz bekannt, umfassend eine erste und eine zweite Schiene, die in Längsrichtung relativ zueinander verschiebbar angebracht sind, ferner umfassend eine Verriegelung, die beweglich zwischen einer entriegelten Position und einer verriegelten Position angebracht ist, wobei die Verriegelung die erste und die zweite Schiene relativ zueinander unbeweglich macht, wobei die erste Schiene eine mit der Verriegelung einstückige Achse aufweist, wobei die Achse im Falle eines vorbestimmten Stoßes eine Drehung der Verriegelung relativ zur ersten Schiene um eine Richtung senkrecht zur Längsrichtung ermöglicht, so dass die Verriegelung die gesamte Beweglichkeit der Schieben relativ zueinander dauerhaft aufhebt, wobei die Klinke seitliche Zähne aufweist, die bei einem vorgegebenen Aufprall durch an der ersten Schiene angeordnete, den Zähnen zugewandte Fenster austreten und mit der zweiten Schiene in Kontakt kommen.

Aus der DE 10 2004 001 593 B3 ist ein Verfahren zur Herstellung eines Befestigungselementes eines Längseinstellers für einen Fahrzeugsitz bekannt. Gemäß dem Verfahren wird in einem ersten Schritt ein abgelängter Draht in einen Rohling gestaucht und in einem zweiten Schritt der Rohling zum Befestigungselement mit endgültiger Außenkontur gepresst.

Aus der EP 2 070 761 A2 ist eine Getriebebaueinheit einer Verstelleinrichtung eines Kraftfahrzeugs bekannt, die zur Betätigung eines Verstellteiles des Kraftfahrzeugs ausgebildet und vorgesehen ist, mit einem Getriebegehäuse, mit einer am Getriebegehäuse gelagerten Getriebebaugruppe, deren Elemente zumindest teilweise innerhalb des Getriebegehäuses angeordnet sind, mit einem längserstreckten Getriebeteil, das zumindest einseitig aus dem Getriebegehäuse hinausragt, und mit einem Halter, der das Getriebegehäuse umgreift und der mindestens eine Durchgangsöffnung aufweist, die von dem längserstreckten Getriebeteil durchgriffen wird.

### Aufgabe

Der Erfindung liegt die Aufgabe zu Grunde, einen Längseinsteller der eingangs genannten Art zu verbessern, insbesondere die Festigkeit des Längseinstellers im Crashfall zu erhöhen, sowie einen entsprechenden Fahrzeugsitz bereitzustellen.

### Lösung

Diese Aufgabe wird erfindungsgemäß gelöst durch einen Längseinsteller für einen Fahrzeugsitz, insbesondere Kraftfahrzeugsitz, aufweisend mindestens ein Schienenpaar, welches aus einer ersten Sitzschiene, insbesondere zur Verbindung mit einer Sitzstruktur, und einer zweiten Sitzschiene, insbesondere zur Verbindung mit einer Fahrzeugstruktur, gebildet ist. Die Sitzschienen des Schienenpaares sind in Längsrichtung relativ zueinander verschiebbar und umgreifen unter Bildung eines Innenkanals einander wechselseitig. In dem Innenkanal ist ein an der ersten Sitzschiene befestigtes Sicherungsprofil angeordnet, und in dem Innenkanal ist ferner eine relativ zur zweiten Sitzschiene fixierte Zahnstange angeordnet. Das Sicherungsprofil und die Zahnstange sind im Normalfall voneinander beabstandet und gelangen in Reaktion auf eine vorgegebene Krafteinwirkung, beispielsweise im Crashfall, miteinander formschlüssig in Eingriff, wobei das Sicherungsprofil die Zahnstange umgreift.

Dadurch, dass in dem Innenkanal an der ersten Sitzschiene ein Sicherungsprofil befestigt ist und in dem Innenkanal ferner eine Zahnstange angeordnet ist, wobei das Sicherungsprofil und die Zahnstange im Normalfall voneinander beabstandet sind und in Reaktion auf eine vorgegebene Krafteinwirkung, beispielsweise im Crashfall, miteinander formschlüssig in Eingriff gelangen, wird es in besonders vorteilhafter Weise ermöglicht, dass die Belastbarkeit des Längseinstellers, insbesondere bei sogenannten Gurtintegrationssitzen, in Situationen mit vergleichsweise sehr hohen Crash-Lasten sowohl in Vertikalrichtung, als auch in Längsrichtung erhöht werden kann. Ferner wird gemäß der vorgeschlagenen Lösung eine Belastung einer herkömmlichen Schienenverriegelung zur Einstellung einer Sitzlängsposition verringert, so dass eine Überbelastung der Schienenverriegelung verhindert ist. Weiterhin ist vorteilhaft, dass eine zusätzliche Lastaufnahme mittels des Sicherungsprofils und der Zahnstange ausschließlich im Crash-Fall aktiv ist und während eines normalen Gebrauchs des Längseinstellers keine Einschränkungen erfolgen.

Unter dem Wortlaut "voneinander beabstandet" im Sinne der Erfindung soll insbesondere auch verstanden werden, dass die jeweils benannten Bauteile, in obigem Zusammenhang beispielsweise das Sicherungsprofil und die Zahnstange, sich gegenseitig abschnittsweise umschließen können, hierbei jedoch keinen unmittelbaren Kontakt zueinander aufweisen.

Vorteilhafte Ausgestaltungen, welche einzeln oder in Kombination miteinander eingesetzt werden können, sind Gegenstand der Unteransprüche.

Die Zahnstange kann eine Verzahnung mit nach unten gerichteten Zähnen aufweisen. Die Zahnstange kann wenigstens in einem vorderen Abschnitt, insbesondere mittels eines Adapters, mit der zweiten Sitzschiene verbunden sein, insbesondere verschweißt sein. Die Zahnstange kann nach hinten aus dem Innenkanal herausgeführt sein und in einem hinteren Abschnitt, insbesondere mittels eines Adapters, mit einer Fahrzeugstruktur verbindbar sein.

Die Zähne der Verzahnung können jeweils zwei Zahnflanken aufweisen, welche in Richtung eines Zahnkopfes aufeinander zu geneigt sind. Die Zähne können einen rechteckigen oder trapezförmigen Querschnitt aufweisen.

Die Verzahnung der Zahnstange kann eine Schrägverzahnung sein. Die nach unten gerichtete Fläche der Zahnstange kann gewölbt sein. Die Verzahnung kann ein Teil eines Gewindes sein. Die Zahnstange kann eine Gewindestange sein. Die Zahnstange kann eine Spindel sein.

Die Zähne können in Längsrichtung gemessen eine Zahndicke im Bereich von 0,15 mm bis 5 mm, insbesondere eine mittlere Zahndicke im Bereich von 0,15 mm bis 5 mm, aufweisen. Unter einer mittleren Zahndicke wird die Zahndicke im Bereich der halben Zahnhöhe verstanden. Die Zahndicke kann allgemein bevorzugt derart dimensioniert sein, dass im Crashfall eine Verformung der Zähne durch das Eingreifen des Sicherungsprofils verhindert ist. Die Zähne können in Vertikalrichtung gemessen eine Zahnhöhe im Bereich von 0,25 mm bis 5 mm, bevorzugt im Bereich von 0,3 mm bis 1 mm, aufweisen. Die Zahnhöhe und hierdurch ebenfalls eine Tiefe der Zahnlücken können allgemein bevorzugt derart dimensioniert sein, dass im Crashfall eine ausreichende Tiefe der Zahnlücken für das Eingreifen des Sicherungsprofils bereitgestellt wird.

Das Sicherungsprofil kann einen im Wesentlichen L-förmigen Querschnitt aufweisen.

Das Sicherungsprofil kann, insbesondere in einem horizontalen Abschnitt, mit der ersten Sitzschiene verschraubbar sein. Das Sicherungsprofil kann, insbesondere in einem vertikalen Abschnitt, eine Durchgangsöffnung aufweisen. Erfindungsgemäß umgreift das Sicherungsprofil die Zahnstange. Die Zahnstange kann die Durchgangsöffnung des Sicherungsprofils durchdringen. Das Sicherungsprofil kann, insbesondere im Bereich einer unteren Wandung der Durchgangsöffnung, eine mit der Verzahnung der Zahnstange kooperierende Gegenverzahnung aufweisen.

Ein Zahnabstand kann zwischen zwei benachbarten Zähnen größer sein, als die Dicke des Sicherungsprofils, insbesondere eines vertikalen Abschnitts des Sicherungsprofils.

Diese Aufgabe wird ferner erfindungsgemäß gelöst durch einen Fahrzeugsitz mit einem zuvor beschriebenen Längseinsteller, wobei der Fahrzeugsitz eine Sitzstruktur aufweist, welche mit einer ersten Sitzschiene des Längseinstellers verbunden ist.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines erfindungsgemäßen Fahrzeugsitzes mit einem erfindungsgemäßen Längseinsteller,
- Fig. 2:: eine perspektivische Darstellung eines Schienenpaares eines erfindungsgemäßen Längseinstellers gemäß einer ersten Ausführungsform,
- Fig. 3:: einen Längsschnitt des Schienenpaares gemäß der ersten Ausführungsform,
- Fig. 4:: eine perspektivische Ansicht auf eine Zahnstange und ein Sicherungsprofil gemäß der ersten Ausführungsform,
- Fig. 5:: einen Querschnitt des Schienenpaares gemäß der ersten Ausführungsform,
- Fig. 6:: einen Längsschnitt des Schienenpaares eines Längseinstellers gemäß einer zweiten Ausführungsform,
- Fig. 7:: eine perspektivische Ansicht auf ein Sicherungsprofil gemäß der zweiten Ausführungsform,
- Fig. 8:: eine perspektivische Ansicht auf ein Schienenpaar eines Längseinstellers gemäß einer dritten Ausführungsform,
- Fig. 9:: eine perspektivische Ansicht auf eine Spindel des Längseinstellers gemäß der dritten Ausführungsform und
- Fig. 10:: eine Seitenansicht auf die Spindel des Längseinstellers gemäß der dritten Ausführungsform.

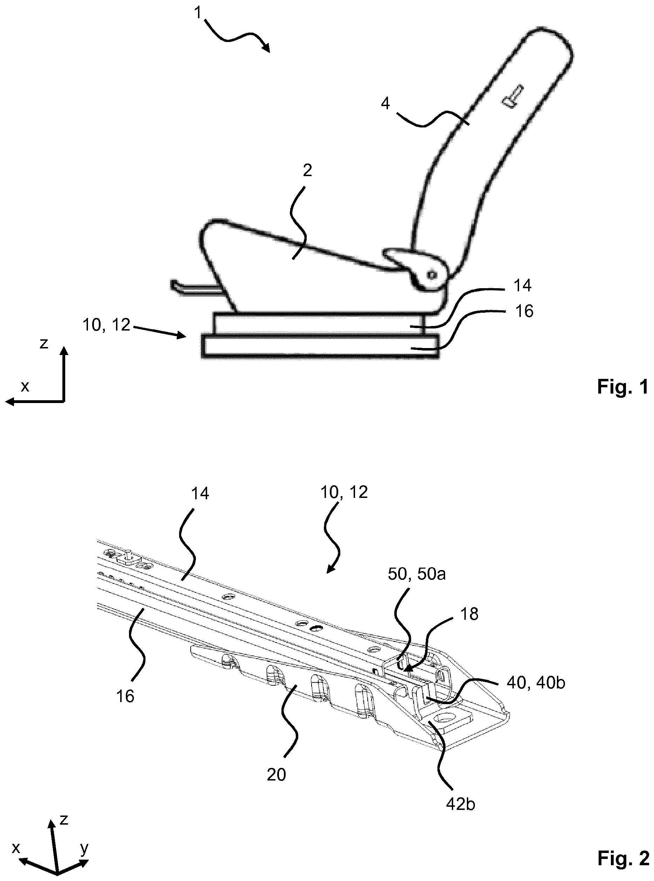

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Die Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert. Der Längseinsteller 10 weist ein Schienenpaar 12 auf. Das Schienenpaar 12 ist aus einer ersten Sitzschiene 14, insbesondere zur Verbindung mit einer Sitzstruktur, und einer zweiten Sitzschiene 16, insbesondere zur Verbindung mit einer Fahrzeugstruktur, gebildet. Die Sitzschienen 14, 16 des Schienenpaares 12 sind in Längsrichtung x relativ zueinander verschiebbar.

Fig. 2 zeigt das Schienenpaar 12 des erfindungsgemäßen Längseinstellers 10, für den Fahrzeugsitz 1 aus Fig. 1. Das Schienenpaar 12 umfasst eine erste Sitzschiene 14, insbesondere zur Verbindung mit einer Sitzstruktur, und eine zweite Sitzschiene 16, insbesondere zur Verbindung mit einer Fahrzeugstruktur. Die Sitzschienen 14, 16 des Schienenpaares 12 sind in Längsrichtung x relativ zueinander verschiebbar und umgreifen unter Bildung eines Innenkanals 18 einander wechselseitig. In dem Innenkanal 18 ist an der ersten Sitzschiene 14 ein Sicherungsprofil 50 befestigt, insbesondere an einem hinteren Ende der ersten Sitzschiene 14. In dem Innenkanal 18 ist ferner eine Zahnstange 40 angeordnet.

Das hintere Ende der zweiten Sitzschiene 16 ist von einem Profilblech 20 umgriffen. Das Profilblech 20 ist vorliegend ein Blechbiegeteil, insbesondere ein im Wesentlichen U-förmig gebogenes Profilblech 20. Das Profilblech 20 ist von unten auf die zweite Sitzschiene 16 aufgeschoben und bevorzugt fest mit der zweiten Sitzschiene 16 verbunden. Das Profilblech 20 ist bevorzugt mit der zweiten Sitzschiene 16 verschweißt. Das Profilblech 20 weist eine Mehrzahl an Sicken auf, welche die Steifigkeit des Profilblechs 20 erhöhen.

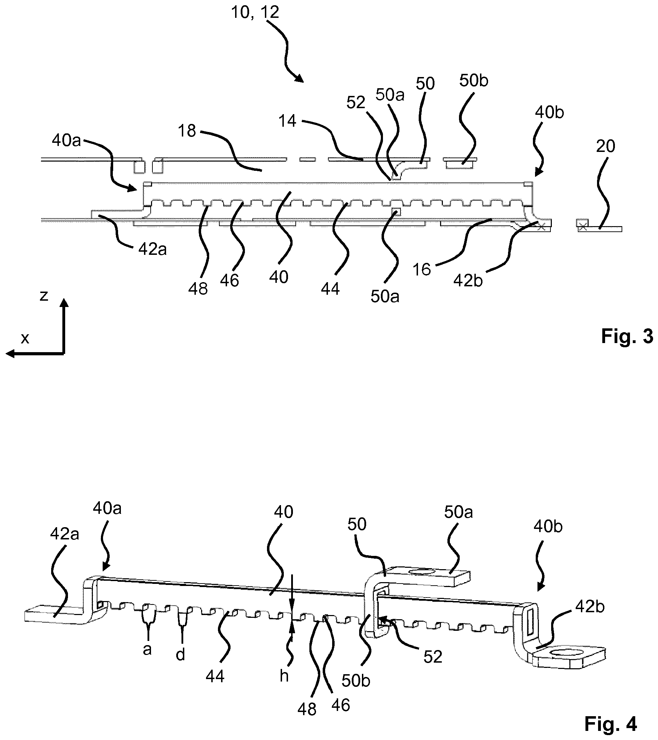

Fig. 3 zeigt einen Längsschnitt des Schienenpaares 12 gemäß einer ersten Ausführungsform. Fig. 4 zeigt die Zahnstange 40 und das Sicherungsprofil 50 des Schienenpaares 12 von Fig. 3 in einer perspektivischen Ansicht.

Die Zahnstange 40 weist eine Verzahnung mit nach unten gerichteten Zähnen 44 auf. Die Zahnstange 40 ist in einem vorderen Abschnitt 40a mit der zweiten Sitzschiene 16 verbunden. Die Zahnstange 40 ist in einem vorderen Abschnitt 40a mittels eines Adapters 42a mit der zweiten Sitzschiene 16 verbunden. Die Zahnstange 40 ist mit der zweiten Sitzschiene 16 verschweißt. Die Zahnstange 40 ist an einem hintern Ende des Schienenpaares 12 aus dem Innenkanal 18 herausgeführt. Die Zahnstange 40 ist in einem hinteren Abschnitt 40b mit einer Fahrzeugstruktur verbindbar. Die Zahnstange 40 ist in dem hinteren Abschnitt 40b mittels eines Adapters 42b mit einer Fahrzeugstruktur verbindbar. Die Zahnstange 40 ist mit der Fahrzeugstruktur verschraubbar.

Das Sicherungsprofil 50 weist einen im Wesentlichen L-förmigen Querschnitt auf. Das Sicherungsprofil 50 ist mit der ersten Sitzschiene 14 verschraubbar. Ein horizontaler Abschnitt 50a des Sicherungsprofils 50 ist mit der ersten Sitzschiene 14 verschraubbar. Das Sicherungsprofil 50 weist eine Durchgangsöffnung 52 auf. Ein vertikaler Abschnitt 50b des Sicherungsprofils 50 weist eine Durchgangsöffnung 52 auf. Das Sicherungsprofil 50 umgreift die Zahnstange 40. Die Zahnstange 40 durchdringt die Durchgangsöffnung 52 des Sicherungsprofils 50. Das Sicherungsprofil 50 und die Zahnstange 40 sind im Normalfall voneinander beabstandet. In Reaktion auf eine vorgegebene Krafteinwirkung, beispielsweise im Crashfall, gelangen diese miteinander formschlüssig in Eingriff.

Die Zähne 44 der Zahnstange 40 weisen gemäß der ersten Ausführungsform vorliegend eine Zahndicke d im Bereich von 3 mm bis 5 mm auf. Durch die Zahndicke d in Verbindung mit der Anzahl der belasteten Zähne wird eine Belastbarkeit des Zahneingriffs im Wesentlichen definiert.

Die Zähne 44 weisen vorliegend eine Zahnhöhe h im Bereich von 2,5 mm bis 5 mm auf. Die Zähne 44 weisen eine Zahnabstand a im Bereich von 3,5 mm bis 6 mm auf. Ein Zahnabstand a zwischen zwei benachbarten Zähnen 44 ist gemäß der ersten Ausführungsform größer als die Dicke des vertikalen Abschnitts 50b des Sicherungsprofils 50.

Die Zähne 44 können einen rechteckigen oder trapezförmigen Querschnitt aufweisen. Die Zähne 44 der Verzahnung weisen jeweils zwei Zahnflanken 46 auf, welche in Richtung eines Zahnkopfes 48 aufeinander zu geneigt sind.

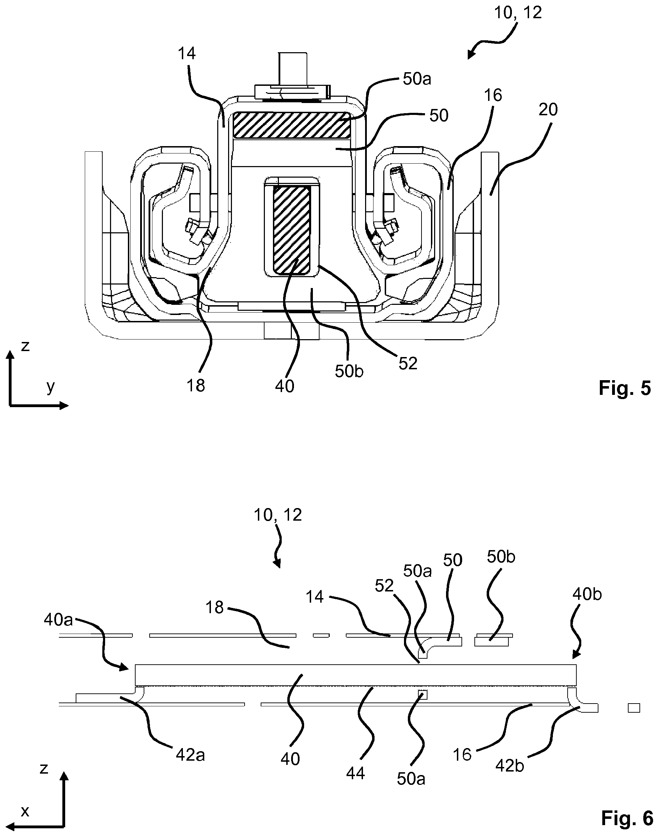

Fig. 5 zeigt einen Querschnitt des Schienenpaares 12 gemäß der ersten Ausführungsform. Der vertikale Abschnitt 50b des Sicherungsprofils 50 weist eine äußere Kontur auf, welche unter Bildung eines Spaltes abschnittsweise der inneren Kontur der ersten Sitzschiene 14 folgt. Der vertikale Abschnitt 50b des Sicherungsprofils 50 füllt den Querschnitt des Innenkanals 18 unter Bildung eines abschnittsweise umlaufenden Spaltes annähernd vollständig aus. Der vertikale Abschnitt 50b des Sicherungsprofils 50 dient im Crashfall dazu, ein Verbiegen der beiden in Querrichtung y äußeren Abschnitte der ersten Sitzschiene 14 nach innen zu verhindern. Ferner dient das Profilblech 20, welches die zweite Sitzschiene 16 von unten umgreift, dazu, ein Auseinanderbiegen der in Querrichtung y betrachtet äußeren Schenkel der zweiten Sitzschiene 16 zu verhindern. In Zusammenwirkung des Sicherungsprofils 50 und des Profilblechs 20 wird ein Ausschälen der Sitzschienen 14, 16, ein sogenannter Peeling-Effekt, verhindert. Dieser Peeling-Effekt wird ebenfalls durch die Wirkung des Sicherungsprofils 50 in Verbindung mit der Zahnstange 40 verringert, wenn nicht sogar verhindert, in dem die auf die erste Sitzschiene 14 in Vertikalrichtung z nach oben einwirkende Kraft über die Zahnstange 40 in die Fahrzeugstruktur abgeleitet wird.

Fig. 6 zeigt das Schienenpaar 12 gemäß einer zweiten Ausführungsform. Die zweite Ausführungsform entspricht, sofern nicht ausdrücklich anders beschreiben, der ersten Ausführungsform. Die Verzahnung der Zahnstange 40 gemäß der zweiten Ausführungsform ist eine Schrägverzahnung. Die Schrägverzahnung kann mittels eines Gewinde-Schneidwerkzeuges erzeugt sein. Es ist ferner denkbar, dass die Zahnstange 40 gemäß der zweiten Ausführungsform eine Gewindespindel ist. Die Zähne 44 der Verzahnung weisen eine Zahndicke im Bereich von 0,15 mm bis 2 mm auf. Die Zähne 44 weisen eine Zahnhöhe im Bereich von 0,25 mm bis 1,5 mm auf.

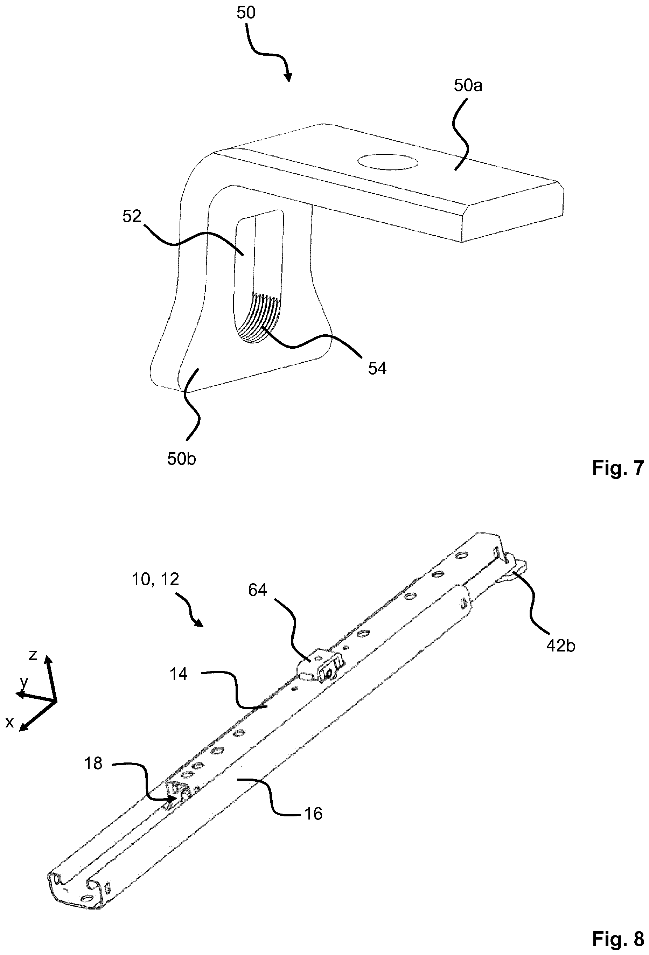

Fig. 7 zeigt das Sicherungsprofil 40 gemäß der zweiten Ausführungsform. Das Sicherungsprofil 50 weist wenigstens im Bereich einer unteren Wandung der Durchgangsöffnung 52 eine mit der Verzahnung der Zahnstange 40 kooperierende Gegenverzahnung 54 auf. Eine Dimensionierung der Gegenverzahnung 54 stimmt im Wesentlichen mit einer Dimensionierung der Zähne 44 der Verzahnung überein.

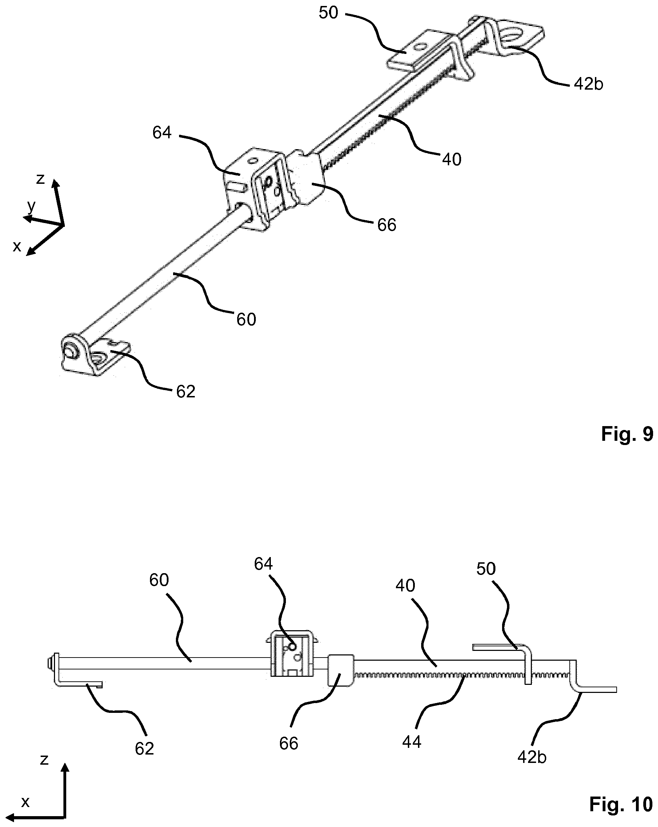

Die Figuren 8 bis 10 zeigen unterschiedliche Teile des Längseinstellers 10 gemäß eines dritten Ausführungsbeispiels. Gemäß dem dritten Ausführungsbeispiel des Längseinstellers 10, weist dieser im Innenkanal 18 eine Spindel 60 sowie ein entlang der Spindel verfahrbaren Verstellgetriebe 64 auf. Zum Einstellen einer Sitzlängsposition ist das Verstellgetriebe 64 mittels eines nicht gezeigten Motors antreibbar. Die Spindel 60, insbesondere ein vorderer Endabschnitt der Spindel 60, ist bevorzugt mittels eines Spindelhalters 62 fest mit der zweiten Sitzschiene 16 verbunden. Wie in den Figuren 9 und 10 gezeigt ist, ist die Zahnstange 40 in Längsrichtung x fluchtend hinter der Spindel 60 angeordnet. Die Spindel 60 und die Zahnstange 40 sind mittels eines Verbindungsadapters 66 miteinander verbunden. Der Verbindungsadapter 66 kann in der zweiten Sitzschiene 16 fixiert sein. Der Verbindungsadapter 66 kann als hinterer Endanschlag dienen.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, solange der resultierende Gegenstand zum Umfang gehört, der durch die Ansprüche definiert ist.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 10: Längseinsteller
- 12: Schienenpaar
- 14: ersten Sitzschiene
- 16: zweiten Sitzschiene
- 18: Innenkanal
- 20: Profilblech
- 40: Zahnstange
- 40a: vorderer Abschnitt (der Zahnstange)
- 40b: hinterer Abschnitt (der Zahnstange)
- 42a: Adapter
- 42b: Adapter
- 44: Zahn
- 46: Zahnflanke
- 48: Zahnkopf
- 50: Sicherungsprofil
- 50a: horizontaler Abschnitt (des Sicherungsprofils)
- 50b: vertikaler Abschnitt (des Sicherungsprofils)
- 52: Durchgangsöffnung
- 54: Gegenverzahnung
- 60: Spindel
- 62: Spindelhalter
- 64: Verstellgetriebe
- 66: Verbindungsadapter
- a: Zahnabstand
- d: Zahndicke
- h: Zahnhöhe
- x: Längsrichtung
- y: Querrichtung
- z: Vertikalrichtung

## Patentansprüche

1. Längseinsteller (10) für einen Fahrzeugsitz (1), insbesondere Kraftfahrzeugsitz, aufweisend mindestens ein Schienenpaar (12), welches aus einer ersten Sitzschiene (14), insbesondere zur Verbindung mit einer Sitzstruktur, und einer zweiten Sitzschiene (16), insbesondere zur Verbindung mit einer Fahrzeugstruktur, gebildet ist, wobei die Sitzschienen (14, 16) des Schienenpaares (12) in Längsrichtung (x) relativ zueinander verschiebbar sind und unter Bildung eines Innenkanals (18) einander wechselseitig umgreifen, wobei in dem Innenkanal (18) ein an der ersten Sitzschiene (14) befestigtes Sicherungsprofil (50) angeordnet ist, wobei in dem Innenkanal (18) eine relativ zur zweiten Sitzschiene (16) fixierte Zahnstange (40) angeordnet ist, wobei das Sicherungsprofil (50) und die Zahnstange (40) im Normalfall voneinander beabstandet sind und in Reaktion auf eine vorgegebene Krafteinwirkung, beispielsweise im Crashfall, miteinander formschlüssig in Eingriff gelangen,
**dadurch gekennzeichnet, dass**
das Sicherungsprofil (50) die Zahnstange (40) umgreift.

2. Längseinsteller (10) gemäß Anspruch 1, wobei die Zahnstange (40) eine Verzahnung mit nach unten gerichteten Zähnen (44) aufweist.

3. Längseinsteller (10) gemäß einem der Ansprüche 1 oder 2, wobei die Zahnstange (40) wenigstens in einem vorderen Abschnitt (40a), insbesondere mittels eines Adapters (42a), mit der zweiten Sitzschiene (16) verbunden, insbesondere verschweißt, ist.

4. Längseinsteller (10) gemäß einem der Ansprüche 1 bis 3, wobei die Zahnstange (40) nach hinten aus dem Innenkanal (18) herausgeführt ist und in einem hinteren Abschnitt (40b), insbesondere mittels eines Adapters (42b) mit einer Fahrzeugstruktur verbindbar ist.

5. Längseinsteller (10) gemäß einem der Ansprüche 2 bis 4, wobei die Zähne (44) der Verzahnung jeweils zwei Zahnflanken (46) aufweisen, welche in Richtung eines Zahnkopfes (48) aufeinander zu geneigt sind.

6. Längseinsteller (10) gemäß einem der Ansprüche 2 bis 5, wobei die Zähne (44) einen rechteckigen oder trapezförmigen Querschnitt aufweisen.

7. Längseinsteller (10) gemäß einem der Ansprüche 2 bis 6, wobei die Verzahnung der Zahnstange (40) eine Schrägverzahnung ist.

8. Längseinsteller (10) gemäß einem der Ansprüche 2 bis 7, wobei die Zähne (44) eine Zahndicke (d) im Bereich von 0,2 mm bis 5 mm aufweisen.

9. Längseinsteller (10) gemäß einem der Ansprüche 2 bis 8, wobei die Zähne (44) eine Zahnhöhe (h) im Bereich von 1 mm bis 5 mm aufweisen.

10. Längseinsteller (10) gemäß einem der Ansprüche 1 bis 9, wobei das Sicherungsprofil (50) einen im Wesentlichen L-förmigen Querschnitt aufweist.

11. Längseinsteller (10) gemäß einem der Ansprüche 1 bis 10, wobei das Sicherungsprofil (50), insbesondere in einem horizontalen Abschnitt (50a), mit der ersten Sitzschiene (14) verschraubbar ist.

12. Längseinsteller (10) gemäß einem der Ansprüche 1 bis 11, wobei das Sicherungsprofil (50), insbesondere in einem vertikalen Abschnitt (50b), eine Durchgangsöffnung (52) aufweist.

13. Längseinsteller (10) gemäß einem der Ansprüche 1 bis 12, wobei die Zahnstange (40) die Durchgangsöffnung (52) des Sicherungsprofils (50) durchdringt.

14. Längseinsteller (10) gemäß einem der Ansprüche 1 bis 13, wobei die Zahnstange (40) in Längsrichtung (x) fluchtend hinter einer Spindel (60), insbesondere einer Spindel (60) eines motorisch einstellbaren Längseinstellers (10), angeordnet ist.

15. Fahrzeugsitz (1) mit einem Längseinsteller (10) nach einem der vorhergehenden Ansprüche, wobei der Fahrzeugsitz (1) eine Sitzstruktur aufweist, welche mit einer ersten Sitzschiene (14) verbunden ist.

## Claims

1. Longitudinal adjuster (10) for a vehicle seat (1), in particular motor vehicle seat, having at least one pair of rails (12), which is formed from a first seat rail (14), in particular for connecting to a seat structure, and from a second seat rail (16), in particular for connecting to a vehicle structure, wherein the seat rails (14, 16) of the pair of rails (12) are displaceable in a longitudinal direction (x) relative to each other and mutually engage around each other, thereby forming an inner channel (18), wherein a securing profile (50) which is fastened to the first seat rail (14) is arranged in the inner channel (18), wherein a rack (40) which is fixed relative to the second seat rail (16) is arranged in the inner channel (18), wherein the securing profile (50) and the rack (40) are normally spaced apart from each other and enter into engagement with each other in a form-fitting manner in reaction to a predetermined action of force, for example in the event of a crash,
**characterized in that**
the securing profile (50) engages around the rack (40) .

2. Longitudinal adjuster (10) according to Claim 1, wherein the rack (40) has a toothing with downwardly directed teeth (44).

3. Longitudinal adjuster (10) according to either of Claims 1 and 2, wherein the rack (40) is connected, in particular welded, at least in a front portion (40a) to the second seat rail (16), in particular by means of an adapter (42a).

4. Longitudinal adjuster (10) according to one of Claims 1 to 3, wherein the rack (40) is guided out of the inner channel (18) to the rear and is connectable in a rear portion (40b) to a vehicle structure, in particular by means of an adapter (42b) .

5. Longitudinal adjuster (10) according to one of Claims 2 to 4, wherein the teeth (44) of the toothing each have two tooth flanks (46) which are inclined towards each other in the direction of a tooth tip (48) .

6. Longitudinal adjuster (10) according to one of Claims 2 to 5, wherein the teeth (44) have a rectangular or trapezoidal cross section.

7. Longitudinal adjuster (10) according to one of Claims 2 to 6, wherein the toothing of the rack (40) is a helical toothing.

8. Longitudinal adjuster (10) according to one of Claims 2 to 7, wherein the teeth (44) have a tooth thickness (d) in the range of 0.2 mm to 5 mm.

9. Longitudinal adjuster (10) according to one of Claims 2 to 8, wherein the teeth (44) have a tooth height (h) in the range of 1 mm to 5 mm.

10. Longitudinal adjuster (10) according to one of Claims 1 to 9, wherein the securing profile (50) has a substantially L-shaped cross section.

11. Longitudinal adjuster (10) according to one of Claims 1 to 10, wherein the securing profile (50) can be screwed, in particular in a horizontal portion (50a), to the first seat rail (14).

12. Longitudinal adjuster (10) according to one of Claims 1 to 11, wherein the securing profile (50) has a through opening (52), in particular in a vertical portion (50b).

13. Longitudinal adjuster (10) according to one of Claims 1 to 12, wherein the rack (40) penetrates the through opening (52) of the securing profile (50).

14. Longitudinal adjuster (10) according to one of Claims 1 to 13, wherein the rack (40) is arranged aligned in the longitudinal direction (x) behind a spindle (60), in particular a spindle (60) of a motor-adjustable longitudinal adjuster (10).

15. Vehicle seat (1) having a longitudinal adjuster (10) according to one of the preceding claims, wherein the vehicle seat (1) has a seat structure which is connected to a first seat rail (14).

## Revendications

1. Dispositif de réglage longitudinal (10) pour un siège de véhicule (1), en particulier un siège de véhicule automobile, présentant au moins une paire de rails (12) qui est formée à partir d'un premier rail de siège (14), en particulier destiné à être raccordé à une structure de siège, et d'un deuxième rail de siège (16), en particulier destiné à être raccordé à une structure du véhicule, les rails de siège (14, 16) de la paire de rails (12) pouvant être déplacés l'un par rapport à l'autre dans la direction longitudinale (x) et s'engageant mutuellement l'un autour de l'autre en formant un canal intérieur (18), un profil de fixation (50) fixé au premier rail de siège (14) étant disposé dans le canal intérieur (18), une crémaillère (40) fixée par rapport au deuxième rail de siège (16) étant disposée dans le canal intérieur (18), le profil de fixation (50) et la crémaillère (40) étant normalement espacés l'un de l'autre, et en réaction à l'application d'une force prédéfinie, par exemple en cas de collision, venant en prise par engagement par correspondance de formes l'un avec l'autre,
**caractérisé en ce que**
le profil de fixation (50) vient en prise autour de la crémaillère (40).

2. Dispositif de réglage longitudinal (10) selon la revendication 1, dans lequel la crémaillère (40) présente une denture avec des dents (44) orientées vers le bas.

3. Dispositif de réglage longitudinal (10) selon l'une quelconque des revendications 1 et 2, dans lequel la crémaillère (40), au moins dans une portion avant (40a), est connectée, en particulier soudée, au deuxième rail de siège (16), notamment au moyen d'un adaptateur (42a).

4. Dispositif de réglage longitudinal (10) selon l'une quelconque des revendications 1 à 3, dans lequel la crémaillère (40) est guidée hors du canal intérieur (18) vers l'arrière et peut être raccordée à une structure de véhicule dans une portion arrière (40b), en particulier au moyen d'un adaptateur (42b).

5. Dispositif de réglage longitudinal (10) selon l'une quelconque des revendications 2 à 4, dans lequel les dents (44) de la denture présentent chacune deux flancs de dents (46) qui sont inclinés l'un vers l'autre dans la direction d'une tête de dent (48).

6. Dispositif de réglage longitudinal (10) selon l'une quelconque des revendications 2 à 5, dans lequel les dents (44) présentent une section transversale rectangulaire ou trapézoïdale.

7. Dispositif de réglage longitudinal (10) selon l'une quelconque des revendications 2 à 6, dans lequel la denture de la crémaillère (40) est une denture oblique.

8. Dispositif de réglage longitudinal (10) selon l'une quelconque des revendications 2 à 7, dans lequel les dents (44) présentent une épaisseur de dents (d) de l'ordre de 0,2 mm à 5 mm.

9. Dispositif de réglage longitudinal (10) selon l'une quelconque des revendications 2 à 8, dans lequel les dents (44) présentent une hauteur de dent (h) de l'ordre de 1 mm à 5 mm.

10. Dispositif de réglage longitudinal (10) selon l'une quelconque des revendications 1 à 9, dans lequel le profil de fixation (50) présente une section transversale essentiellement en forme de L.

11. Dispositif de réglage longitudinal (10) selon l'une quelconque des revendications 1 à 10, dans lequel le profil de fixation (50), en particulier dans une portion horizontale (50a), peut être vissé au premier rail de siège (14).

12. Dispositif de réglage longitudinal (10) selon l'une quelconque des revendications 1 à 11, dans lequel le profil de fixation (50), en particulier dans une portion verticale (50b), présente une ouverture de passage (52).

13. Dispositif de réglage longitudinal (10) selon l'une quelconque des revendications 1 à 12, dans lequel la crémaillère (40) passe à travers à l'ouverture de passage (52) du profil de fixation (50) .

14. Dispositif de réglage longitudinal (10) selon l'une quelconque des revendications 1 à 13, dans lequel la crémaillère (40) est disposée dans la direction longitudinale (x) en alignement derrière une broche (60), en particulier une broche d'un dispositif de réglage longitudinal (10) pouvant être ajusté par moteur.

15. Siège de véhicule comprenant un dispositif de réglage longitudinal (10) selon l'une quelconque des revendications précédentes, le siège de véhicule (1) présentant une structure de siège qui est raccordée à un premier rail de siège (14).
